Europäisches Patentamt

European Patent Office

Office européen des brevets

(11) Publication number: **0 301 240**
**A2**

## (12) EUROPEAN PATENT APPLICATION

(21) Application number: **88110080.4**

(22) Date of filing: **24.06.88**

(51) Int. Cl.⁴: **H04B 1/66 , H04L 27/18**

(30) Priority: **26.06.87 IT 4811487**

(43) Date of publication of application:
**01.02.89 Bulletin 89/05**

(84) Designated Contracting States:
**DE FR GB NL SE**

(71) Applicant: **SELENIA SPAZIO S.p.A.**
**via Pile 3**
**I-67100 L'Aquila(IT)**

(72) Inventor: **Martinino, Francesco**
**Via Prosdocimo Rotondo 2**
**I - 86100 Campobasso(IT)**
Inventor: **Pugnaloni, Andrea**
**Via Claudio Achillini 22**
**I - 00141 Roma(IT)**
Inventor: **Tripodi, Maurizio**
**Via Romolo Fugazza 19**
**I - 00166 Roma(IT)**

(74) Representative: **Gustorf, Gerhard, Dipl.-Ing.**
**Patentanwalt Dipl.-Ing. Gerhard Gustorf**
**Mühlenstrasse 1**
**D-8300 Landshut(DE)**

(54) **Direct sequence digital spread spectrum modem.**

㊷ Direct sequence Digital Spread Spectrum Modem with key functions which are implemented by means of algorithms achieved by digital techniques in a microprocessor architecture. The invention belongs to the telecommunication systems field.

FIG. 1

## Direct sequence digital spread spectrum modem

This invention regards a Spread Spectrum Modem (so called in technical terms) which operates digitally, in direct sequence, based upon microprocessor architecture and specific algorithms for carrier, clock and code recovery.

The invention belongs to the field of low speed satellite telecommunications utilising a COMA access protocol. The problem which we seek to resolve with this invention is that of providing a compact, low cost, low power consumption modem to be used in different modes, within low speed services, making wide use of microprocessor digital circuits and specialized software algorithms.

The first modulation techniques with signal spread were inducted into military TLC services because of their peculiar resistance to interference. In particular, it was there a matter of techniques which combined the spread operation with further cryptography and peculiar transmission modes such as, for instance, frequency hopping |(which stands for frequency shift).

All main functions, during transmission and reception, were implemented according to solutions of the analogue or digital/analogue type, with particular reference to carrier recovery circuits.

With the development of domestic satellite telecommunication systems, a peculiar area of services has become relevant (tele-detection, low bit rate business service, telemonitoring and telecontrol, signalling channels, etc.) for which the spread spectrum transmission is particularly well suited when adopting satellite access protocol of the CDMA type (Code Division Multiple Access).

This required that spread spectrum modems for civil use be developed; however they maintained an essentially analogue structure.

In particular for such modems, the main code carrier recovery was achieved at intermediate frequency level by means of analogue devices.

In particular, for such modems, the main code and carrier recovery operations were performed at intermediate frequency level with analogue devices.

This approach intrinsically bears higher complexity devices, which are not packaged tightly and present high power consumption and cost. The lack of a microprocessor structure makes such systems poorly flexible also and mostly from the viewpoint of interfacing higher echelon processors and, generally, further intelligent systems.

The modem presented here, due to its essentially digital nature, is a compact, low power consumption, low cost and particularly flexible device due to the S/W implementation of the command algorithms.

The invention will now be described with reference to one of its presently preferred forms, which is reported as an illustration without being limited to it and based upon the figures enclosed:

Figure 1 shows the general schematic of the modem; it shows:
1 transmitter section where
9 is the data input
12 is the modulated sequence output
3 is the base band transmitter
4 BPSK modulator
4 frequency converter;
2 receiver section where
10 is the data output
11 is the modulated signal input
6 base band receiver
7 BPSK demodulator
8 frequency converter.

Figure 2 shows the transmitter section; it shows the blocks labled 3,4,5 in Figure 1. It also shows:
in block 3:
9 data input
13 code length selection
14 code repetition period selection
3a code generator
3b exclusive OR logic gate
in block 4:
4a BPSK modulator .
4b band pass filter
in block 5:
5a local oscillator
5b mixer
12 modulated signal output.

Figure 3 shows the details of block 2 of Figure 1. It shows in block 8:
11 modulated signal input
8a mixer
8b local oscillator
in block 7:
7a bandpass filter
7b lowpass filter
7c mixers
7d 90° phase shifter
7e Schmidt trigger
Block 6 shows correlators 6a and the carrier recovery logics 6b and the code 15 input.

Figure 4 shows the detail of block labled 6b in Figure 3. It shows:
20 PLL (Phase Locked Loop) for frequency synthesizing and tuning, including:
20a reference oscillator
20b divider
20c phase comparator
20d loop filter
20e Voltage Controlled Oscillator (VCO)

20f divider
20g PLL synthesizer control logic for phase regulation including
21a divider
21b phase comparator
21c loop filter
21d Voltage Controlled Oscillator (VCO)
21e divider
21f control logics of the phase shift introduced
22 output of the reconstructed carrier.

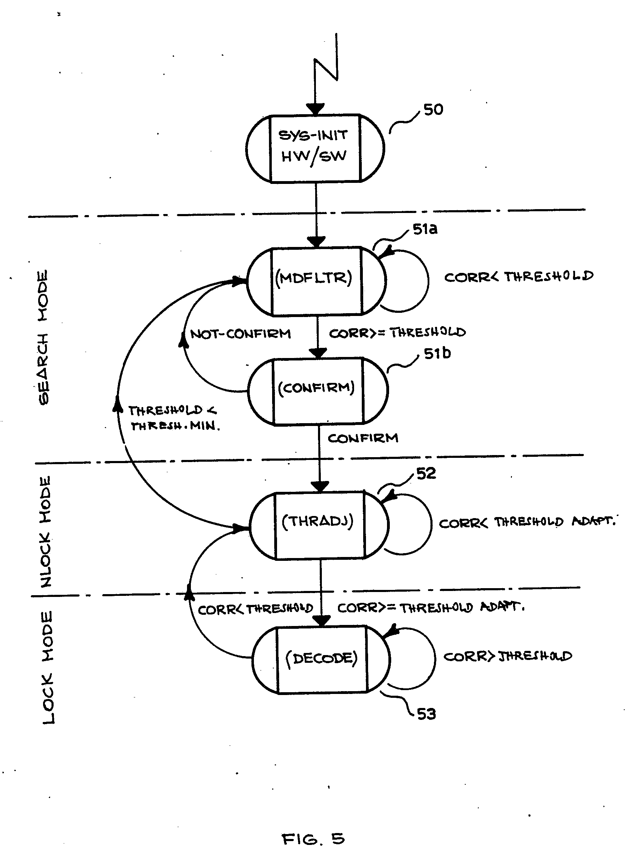

Figure 5 shows the flow diagram of the control algorithm where the following are visible:
50 algorithm initiation block
51a code search block by means of the matched filter; and carrier lock-on;
51b lock-on check block
52 data decoding threshold adaptation block
53 data decoding block.

With reference to the description above and to the figures, in the following the operation of the system subject of the invention is described.

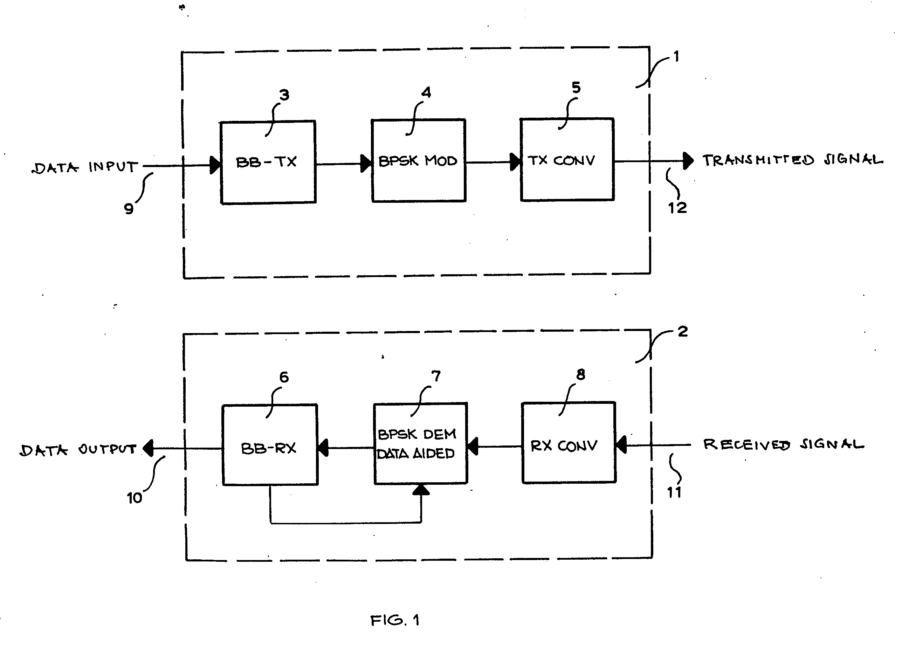

Essentially the invention consists of the two following sections:
- transmitter, 1
- receiver, 2
shown in figure 1.

In turn, the transmitter section consists of the following modules:
- 3 (BB-TX)
which provides for the translation of input data sequence, generated by an external source, into the sequence to be transmitted; .
- 4 (BPSK MOD)
which performs digital BPSK .modulation of the sequence generated by VBB-TX;
- 5 (TX CONV)
which shifts the signal from the carrier frequency to the standard intermediate frequency.

The receiving section consists of the following:
-8 (RX CONV)
which shifts the standard intermediate frequency signal to the carrier frequency.
-7 (BPSK-DEM "Data Aided")
which digitally demodulates the signal received in BPSK standard. Carrier recovery is performed by means of additional information coming from the BB-RX module correctors;
- 6 (BB-RX)
which extracts the data sequence, generated by the transmitting source, from the demodulated sequence.

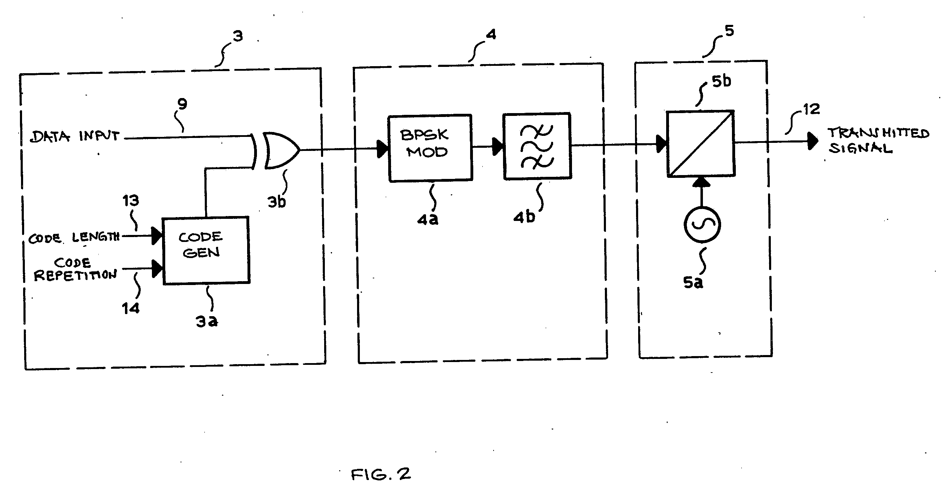

With reference to Figure 2, the transmitting section includes a 3a code generator, which is selectable in terms of width and repetition period as long as "Bit Frequency times Code length" is not greater than the maximum frequency of chips which can be processed by the receiving section.

The code is module two added by ex-or 3b.

The spread factor thus obtained is proportional to the code length. The signal is then BPSK modulated in block 4a and filtered for main lobe in block 4b. The spectrum generated is finally frequency shifted by mixer 5b and local oscillator 5a to obtain a standard intermediate frequency at the output.

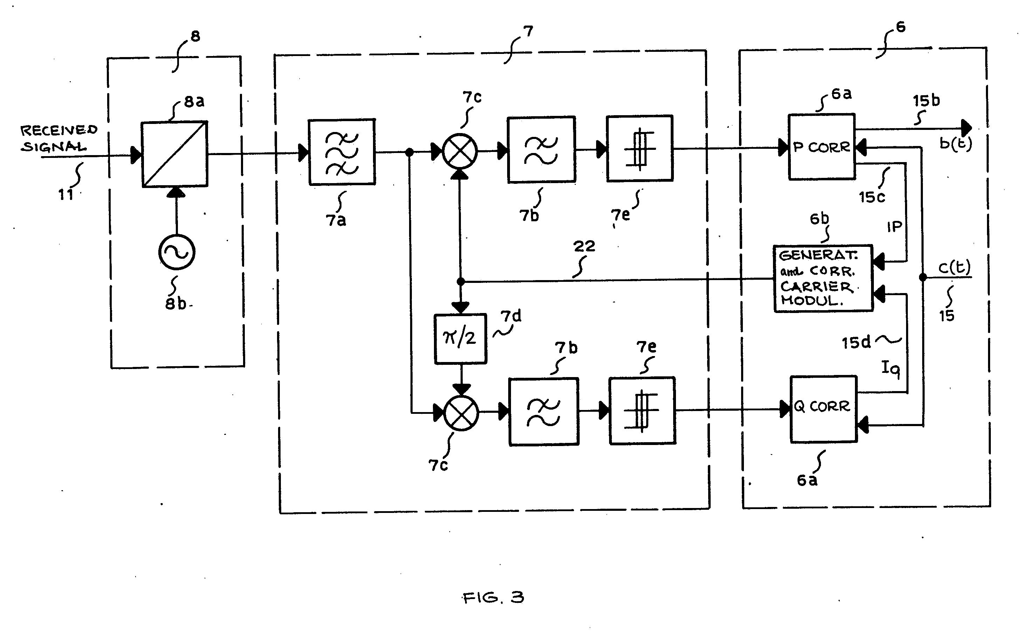

With reference to Figure 3, the signal received is frequency shifted by the standard IF to the carrier frequency by mixer 8a and local oscillator 8b.

Following filter 7a, the signal is coherently demodulated into in-phase and quadrature components.

In particular, the upper branch of the figure extracts the in-phase component through the following steps:
- multiplication by the regenerated carrier (block 7c);
- filtering (block 76)
- regeneration of the digital waveform (block 7e).

The same operations are performed in the lower branch to extract the quadrature component.

The two signals thus obtained are correlated with the code at input 15 by the two correlators 6a to reconstruct the source data sequence at output 15b and signals Ip and Iq present on lines 15c and 15d required to track the carrier.

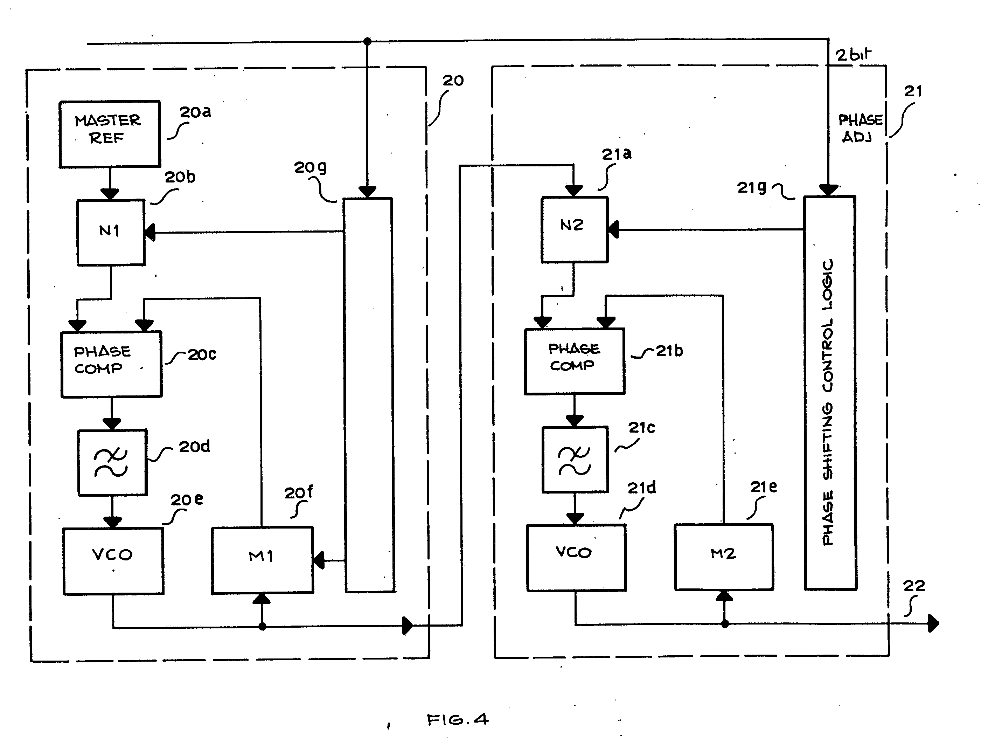

With reference to Fig. 4, the carrier tracker consists of two cascaded Phase Locked Loops, one to current frequency 20 and the other to correct phase 21 of the reconstructed carrier output on line 22.

Both operations are performed by the microprocessor which as a function of the results attained through correction, corrects frequency and phase of the reconstructed carrier.

From what has been described above, the main new feature of the modem is that of transferring the carrier code of clock recovery problems to numencally processed algorithms of the signal within the low band.

In the following, such algorithms are described. With reference to Figure 5, the receiving section control algorithm is structured as a sequential machine which following initialling block 50, evolves through theree operation status: - block 51a and 51b: code synchronism search;
- block 52: adaptive adjustment of the code detection threshold
- block 53: data decoding.

In particular, through such status the receiving section performs the following functions:
1. Initial code and carrier search by the matched filter
2. Synchronization and lock onto code and carrier codes
3. Adaptive adjustment of the code detection threshold

4. Modulating data decoding.

Following initiation, the apparatus enters the code synchronism search phase, in which the required synchronization is met by means of successive correlations based upon a matched filter and checkout procedures of effective lock-on. Once the code lock on has taken place, local carrier frequency and phase adjustments are made to successive error function:

$$Er = Cq/Cp$$

where Cp stands for the in phase branch correlation factor and Cq is that of the quadrature branch; the amount of frequency and phase adjustments consists of suitable prefixed absolute values, while the adjustment sign is set by that of function Er which is introduced beforehand. Code lock on is obtained initially even in presence of large instantaneous phase errors by evaluating a correlation function of the type:

$$C = |Cp^2 + Cq^2|^{\frac{1}{2}}$$

which is indipendent of such instantaneous phase errors. Shifting onto next stage 52 takes place only when a lock on confirmation procedure in block 51b warrants steady code synchronism with good probability.

In state 52, adaptive regulator of code detection threshold takes place so as to detect in the short term, the end of transmission.

Finally, in state 53, the sequence of data transmitted by the source is decoded by analyzing the correlation between memorized code and received chip sequence.

## Claims

1. Digital, direct sequence Spread Spectrum Modem which adopts for transmission the spreading technique of the signal by means of suitable code and "BPSK digital modulation" and for reception a data aided BPSK demodulation characterized by the fact that it consists of a transmitting section (1) which includes base band codes (3), BPSK modulator (4), frequency shifter (5) and a receiving section (2) which includes frequency converter (8), data aided BPSK demodulator, base band processor (6).

2. Digital direct sequence Spread Spectrum Modem as per claim 1, where carrier code & clock recovery and some data extraction correlation operations are carried out by means of totally digital techniques.

3. Digital, direct sequence Spread Spectrum Modem as per claims 1 and 2, where the code, clock and carrier (Fig. 5) recovery algorithm utilize dedicated circuitry (Figures 3 and 4).

4. Direct sequence, digital Spread Spectrum Modem as per claims 1, 2, 3 where carrier instantaneous phase control is achieved in base band by means of PLL circuits controlled by digital circuits microprocessor managed according to the modem control algorithm (Fig. 5).

5. Direct sequence digital Spread Spectrum modem as per claims 1,2,3,4 which is completely programmable, without any modification to the circuitry, in terms of bit rate and code lenght.

6. Direct sequence digital Spread Spectrum Modem as per claims 1,2,3,4,5 which is applicable to all point multipoint data diffusion, telesurveillance, teledetection, mobile telecom munications, highly interference free transmission systems, and to telecommunication networks with COM A access to satellite and generally to low speed telecommunication service.

7. Direct sequence digital Spread spectrum modem as illustrated above and in the drawings attached, as also any part thereof either in isolation or in combination.

FIG. 1

FIG. 2

FIG. 3

RECEIVED SIGNAL

11

8

8a

8b

7

7a

7c

7b

7e

22

7d

$\pi/2$

7b

7e

7c

6

6a

15b

b(t)

15c

IP

6b

GENERAT. and CORR. CARRIER MODUL.

c(t)

15

15d

Iq

Q CORR

6a

P CORR

EP 0 301 240 A2

PHASE SHIFTING CONTROL LOGIC

2 bit

PHASE ADJ

21

21g

21a — N2

21b — PHASE COMP

21c

21d — VCO

21e — M2

22

20

20g

20a — MASTER REF

20b — N1

20c — PHASE COMP

20d

20e — VCO

20f — M1

FIG. 4

EP 0 301 240 A2

FIG. 5